Europäisches Patentamt

European Patent Office

Office européen des brevets

(11) Numéro de publication : **0 438 361 A1**

# (12) DEMANDE DE BREVET EUROPEEN

(21) Numéro de dépôt : **91400122.7**

(22) Date de dépôt : **18.01.91**

(51) Int. Cl.⁵ : **B60P 1/26**

(30) Priorité : **19.01.90 FR 9000648**

(43) Date de publication de la demande :
**24.07.91 Bulletin 91/30**

(84) Etats contractants désignés :
**AT BE CH DE DK ES FR GB IT LI NL**

(71) Demandeur : **S.E.S.R. - SOCIETE
EUROPEENNE DE SEMI-REMORQUES
44, rue François 1er
F-75008 Paris (FR)**

(72) Inventeur : **Bonnard, Claude Gilbert Joseph
9 Place St Rémy
F-54300 Lunéville (FR)**
Inventeur : **Tinelli, Luidi Claude
39 Lotissement "Le Mont"
F-54360 Mont sur Meurthe (FR)**
Inventeur : **Renard, André Pierre
14 rue Joliot Curie
F-54120 Baccarat (FR)**

(74) Mandataire : **Kügele, Bernhard et al
NOVAPAT FRANCE 63 bis, boulevard
Bessières
F-75017 Paris (FR)**

(54) **Benne basculante munie d'un système de verrouillage de sécurité.**

(57) La présente invention concerne une benne basculante comportant une porte arrière constituée de deux battants (2, 3) mobiles autour d'axes verticaux (4, 5). Elle comporte un organe d'actionnement (13) accessible d'au moins un point situé en dehors de la trajectoire de déchargement.

Fig. 1

EP 0 438 361 A1

# BENNE BASCULANTE MUNIE D'UN SYSTEME DE VERROUILLAGE DE SECURITE

La présente invention concerne des bennes basculantes munies d'un passage de déchargement obturable par une porte arrière. La porte arrière est constituée de deux battants pivotant autour d'axes verticaux disposés de part et d'autre du passage de déchargement.

Dans l'état de la technique, les deux battants sont maintenus en position fermée par des moyens de verrouillage actionnés manuellement. Pour manoeuvrer les moyens de verrouillage, l'utilisateur vient se placer derrière la benne. Même lorsque la benne est en position abaissée, la pression des matériaux sur les battants peut être suffisante pour que ceux-ci se déversent dès l'ouverture des battants. Il en résulte un risque non négligeable pour l'utilisateur qui se trouve sur la trajectoire de déchargement lorsqu'il manoeuvre l'ouverture des moyens de verrouillage.

L'objet de la présente invention est de remédier à cet inconvénient en proposant une benne basculante comportant des moyens de verrouillage des battants actionnables sans danger pour l'utilisateur.

La présente invention concerne plus particulièrement une benne basculante comportant une porte arrière constituée de deux battants mobiles chacun autour d'un axe vertical disposé de part et d'autre du passage de déchargement, la porte comportant des moyens de verrouillage des battants dans une position dans laquelle ils obturent le passage de déchargement. Des organes d'actionnement des moyens de verrouillage sont accessibles d'au moins un point non situé dans la trajectoire de déchargement.

L'utilisateur peut ainsi actionner les moyens de verrouillage sans recevoir des chutes de matériaux stockés dans la benne, au moment de l'ouverture des battants.

De préférence, l'organe d'actionnement est constitué par une manette latérale reliée aux moyens de verrouillage de façon à en commander le fonctionnement. Cette manette peut être de type mécanique, mais peut également être constituée par un moyen de commande électrique, pneumatique ou hydraulique.

De préférence, la benne comporte un premier moyen de verrouillage formé par au moins un crochet coopérant en position fermée avec un deuxième moyen de verrouillage formé par au moins un téton. L'un desdits moyens de verrouillage est solidaire de l'un des battants et l'autre moyen est solidaire soit de l'autre battant, soit de la benne. L'un au moins de ces moyens de verrouillage est mobile et est commandé par la manette latérale. De tels moyens de verrouillage présentent une robustesse et une efficacité compatible avec les conditions d'utilisation de telles bennes basculantes.

De préférence, le premier moyen de verrouillage est constitué par au moins un crochet supporté par un axe vertical dont la rotation est commandée par la manette latérale.

Avantageusement, la manette commande la rotation d'un bras présentant à l'extrémité opposée à l'axe de pivotement un doigt susceptible de coopérer avec une surface d'appui complémentaire prévue sur le crochet, la rotation du dit bras entraînant la rotation du crochet entre une position dans laquelle il coopère avec le téton, et une position dans laquelle il autorise l'ouverture des battants.

Selon un mode de réalisation particulier, l'axe de rotation du crochet comporte en outre une tige sensiblement perpendiculaire susceptible d'être bloquée par un verrou complémentaire lorsque les moyens de verrouillage sont en position fermée.

Avantageusement les moyens de verrouillage comportent des moyens élastiques les ramenant en position de fermeture en l'absence d'action sur l'organe d'actionnement.

La présente invention sera mieux comprise à l'aide des dessins où,

– la figure 1 représente une vue de dessous du système de verrouillage,

– la figure 2 représente une vue en perspective d'une variante du système de verrouillage.

La benne (1) est fermée à l'arrière par une porte à deux battants (2, 3) obturant le passage de déchargement en position fermée. Ces battants sont articulés autour d'axes verticaux (4, 5) disposés de part et d'autre du passage de déchargement.

L'un des battants (2) comporte un crochet (6) articulé autour d'un axe vertical (7). Le crochet (6) coopère en position fermée avec un téton (8) solidaire de la benne (1).

Selon une variante non représentée sur cette figure, le téton (8) est solidaire du battant opposé (3). Le crochet (6) est actionné par un doigt (9) disposé à l'extrémité d'un bras (10) articulé autour d'un axe vertical (11). Le doigt (9) coopère avec la surface de contact (12) du crochet (6). Le bras (10) est relié à une manette (13) latérale par l'intermédiaire d'une tige de liaison (14). La manette (13) pivote autour d'un axe de rotation (14). Cette manette latérale (13) permet à l'utilisateur d'actionner l'ouverture du crochet de verrouillage (6) sans venir dans la trajectoire de déchargement.

Le crochet (6) présente une surface de contact avec le téton de retenue (8) dont le profil provoque un effet auto-bloquant lorsqu'une pression s'exerce sur les battants (2, 3).

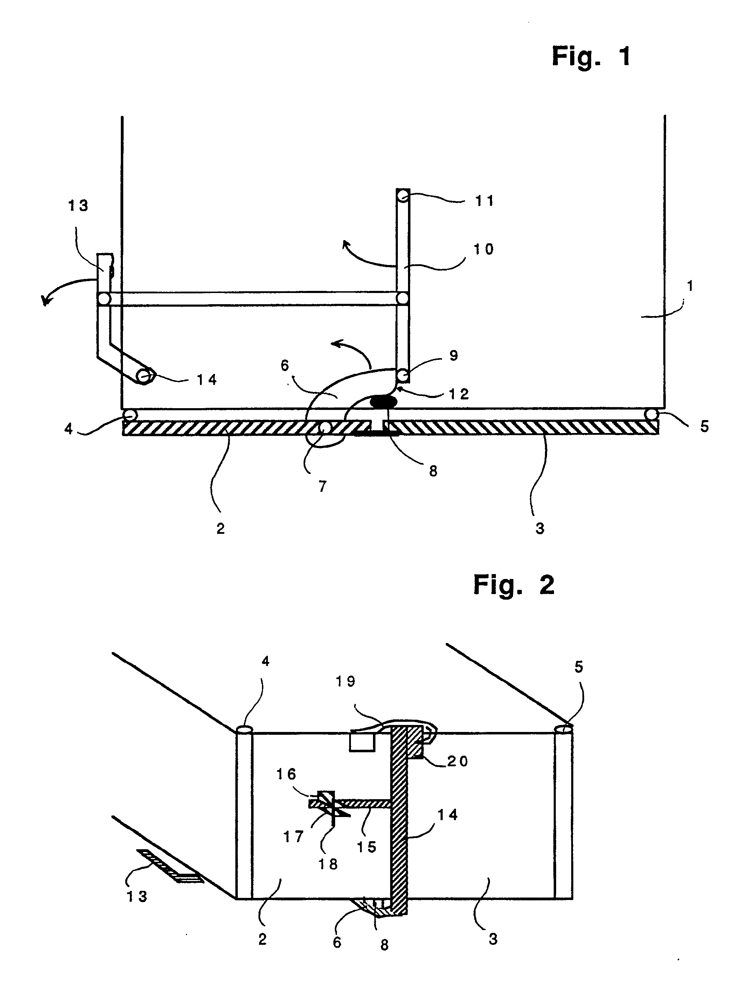

La figure 2 représente un deuxième mode de réalisation d'une benne basculante selon l'invention.

Le système de verrouillage est constitué par un axe vertical (14) solidaire du battant (3). Cet axe supporte à l'extrémité inférieure un crochet (6) coopérant avec un téton de retenue (8). Ce crochet (6) est actionné comme dans le système représenté en figure 1 par une manette latérale (13). L'axe (14) comporte en outre une tige perpendiculaire (15) venant s'appuyer contre le battant (2) lorsque le système de verrouillage est fermé. Lorsque la tige (15) est appuyée contre le battant (2), elle se trouve enserrée entre deux pièces (17, 18) faisant saillie par rapport à la surface du battant (2). Un maneton (16) peut être introduit dans les pièces en saillies (17, 18) afin d'empêcher le retrait de la tige (15). Ce maneton (16) bloque la tige (15) qui interdit ainsi la rotation de l'axe (14) et par conséquent l'ouverture du système de verrouillage. La partie supérieure du battant (2) opposée au battant (3) sur lequel est articulé l'axe (14) présente à sa surface supérieure un crochet (19) entrant en contact, lorsque le système de verrouillage est fermé, avec un téton (20) parallèle à l'axe de rotation (14) et accolé contre ce dernier. Le téton est dimensionné de façon à ce qu'il soit engagé dans le crochet (19) lorsque le système de verrouillage est en position fermée. Par contre lorsque l'action sur la manette (13) provoque la rotation de l'axe (14), cette dernière entraîne le téton (20) dans une position dans laquelle il n'est plus retenu par le crochet (19) et autorise en conséquence l'ouverture des battants.

La présente invention est décrite dans ce qui précède de façon non limitative. Il est bien entendu qu'il est possible de remplacer le système de verrouillage par tous autres moyens connus dans l'état de l'art sans sortir du cadre de l'invention visant plus spécialement à permettre l'actionnement du système de verrouillage depuis une position située en dehors de la trajectoire de déchargement.

## Revendications

1 - Benne basculante comportant une porte arrière constituée de deux battants (2, 3) mobiles chacun autour d'un axe vertical (4, 5), lesdits axes étant disposés de part et d'autre du passage de déchargement, ladite porte comportant des moyens de verrouillage des battants dans une position dans laquelle ils obturent le dit passage de déchargement, caractérisée en ce que l'organe d'actionnement (13) des moyens de verrouillage est accessible d'au moins un point non situé dans la trajectoire de déchargement.

2 - Benne basculante selon la revendication 1 caractérisée en ce que l'organe d'actionnement est constitué par une manette (13) latérale reliée aux moyens de verrouillage de façon à en commander le fonctionnement.

3 - Benne basculante selon la revendication 2 caractérisée en ce qu'elle comporte un premier moyen de verrouillage formé par au moins un crochet (6) coopérant en position fermée avec un deuxième moyen de verrouillage formé par au moins un téton (8), l'un desdits moyens étant solidaire de l'un des battants et l'autre moyen étant solidaire de l'autre battant ou de la benne, l'un au moins des moyens étant mobile et commandé par ladite manette latérale (13).

4 - Benne basculante selon la revendication 3 caractérisée en ce que le premier moyen de verrouillage est constitué par au moins un crochet (6) supporté par un axe vertical (14), la rotation dudit axe vertical étant commandé par ladite manette latérale.

5 - Benne basculante selon la revendication 4 caractérisée en ce que la manette commande la rotation d'un bras (10) présentant à l'extrémité opposée à l'axe de pivotement un doigt (9) susceptible de coopérer avec une surface d'appui (12) complémentaire prévue sur le crochet (6).

6 - Benne basculante selon la revendication 1, caractérisée en ce que l'axe de rotation du crochet (14) comporte en outre une tige (15) sensiblement perpendiculaire susceptible d'être bloqué par un verrou complémentaire (16) lorsque les moyens de verrouillage sont en position fermée.

7 - Benne basculante selon l'une quelconque des revendications 1 à 6 caractérisée en ce que les moyens de verrouillage comportent des moyens élastiques les ramenant en position de fermeture en l'absence d'action sur l'organe d'actionnement.

# Fig. 1

# Fig. 2

Office européen
des brevets

**RAPPORT DE RECHERCHE EUROPEENNE**

Numero de la demande

EP    91 40 0122

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2440286 (INTERPAR)<br>* page 2, ligne 19 - page 2, ligne 21; figure 1 * | 1 | B60P1/26 |
| Y | GB-A-2199365 (GORRIGATE)<br>* page 6, ligne 19 - page 7, ligne 12; figures 1, 6, 7 * | 1 | |
| A | | 2, 3, 4 | |
| A | FR-A-1208654 (BENNES SAMSON)<br>* colonne 1, alinéa 2 - page 2, colonne 1, ligne 10; figures 1-4 * | 3-5, 7 | |
| A | FR-A-2377903 (HESTERBERG)<br>* page 3, ligne 4 - page 4, ligne 21; revendication 1; figures 1-3 * | 1, 2, 7 | |
| A | FR-A-1201718 (BERTHE)<br>* abrégé; figures 1-3 * | 7 | |
| A | FR-A-2510957 (BARRE)<br>* figure 1 * | 1 | **DOMAINES TECHNIQUES RECHERCHES (Int. Cl.5)**<br><br>B60P |

Le présent rapport a été établi pour toutes les revendications

| Lieu de la recherche | Date d'achèvement de la recherche | Examinateur |
|---|---|---|
| LA HAYE | 09 AVRIL 1991 | DENICOLAI G. |

EPO FORM 1503 03.82 (P0402)